(19) Europäisches Patentamt
European Patent Office
Office européen des brevets

(11) EP 1 702 885 A1

(12) EUROPEAN PATENT APPLICATION
published in accordance with Art. 158(3) EPC

(43) Date of publication:
**20.09.2006 Bulletin 2006/38**

(21) Application number: **04807961.0**

(22) Date of filing: **28.12.2004**

(51) Int Cl.:
***C01B 31/02*** *(2006.01)*

(86) International application number:
**PCT/JP2004/019606**

(87) International publication number:
**WO 2005/066072 (21.07.2005 Gazette 2005/29)**

(84) Designated Contracting States:
**DE FR GB**

(30) Priority: **06.01.2004 JP 2004001309**
**26.11.2004 JP 2004342084**

(71) Applicants:
- **Kyoto University**
  **Kyoto-shi, Kyoto 606-8501 (JP)**
- **NIPPON TELEGRAPH AND TELEPHONE CORPORATION**
  **Tokyo 100-8116 (JP)**
- **Pioneer Design Corporation**
  **Meguro-ku,**
  **Tokyo 153-8654 (JP)**
- **ROHM CO., LTD.**
  **Kyoto-shi, Kyoto 615-8585 (JP)**

(72) Inventors:
- **KOMATSU, Naoki,**
  **Shiga Univ. of Medical Science**
  **Otsu-shi, Shiga 520-2192 (JP)**
- **OSUKA, Atsuhiro,**
  **c/o Kyoto University**
  **Kyoto-shi, Kyoto 606-8502 (JP)**
- **ISODA, Seiji**
  **Uji-shi, Kyoto 611-0011 (JP)**
- **NAKASHIMA, Naotoshi,**
  **c/o Kyushu University**
  **Fukuoka-shi, Fukuoka 812-8581 (JP)**
- **MURAKAMI, Hiroto,**
  **c/o Nagasaki University**
  **Nagasaki-shi, Nagasaki 852-8521 (JP)**

(74) Representative: **HOFFMANN EITLE**
**Patent- und Rechtsanwälte**
**Arabellastrasse 4**
**81925 München (DE)**

# (54) CARBON NANOTUBE AND METHOD OF PURIFYING THE SAME

(57) Single-walled carbon nanotubes (SWCNT) are purified, and diameters and lengths of the purified SWCNTs can be made selectable.

The carbon nanotubes are purified by executing a step of adding the carbon nanotubes into a solution in which a template compound consisting of receptor regions each including a conjugated ring structure and a spacer region that fixes the receptor region is dissolved, and of extracting specific carbon nanotubes into the solution, and a step of recovering the extracted carbon nanotubes.

FIG.2

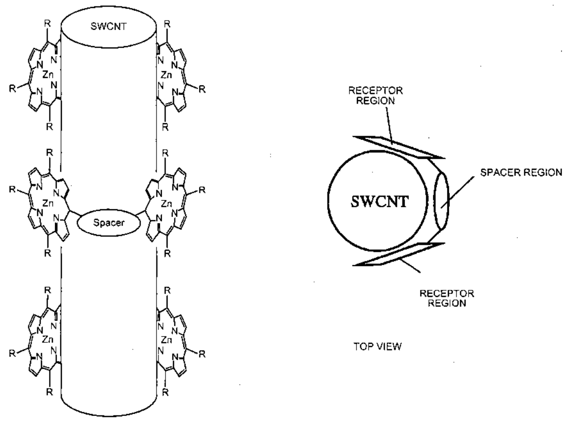


EP 1 702 885 A1

## Description

### TECHNICAL FIELD

The present invention relates to a method for purifying carbon nanotubes a diameter of each of which can be selected and to purified carbon nanotubes.

### BACKGROUND ART

In recent years, attention has been paid to carbon nanotubes, which are cylindrical carbon materials having a diameter of several nanometers to several tens of nanometers, as a functional material such as molecular elements that can be integrated at very high density, an occluding material occluding various type of gases such as a hydrogen gas, a field emission display (FED) member, an electrode material, or an added material to a resin molded product.

Methods for manufacturing the carbon nanotubes include an arc discharge method, a CVD (Chemical Vapor Deposition) method, and a laser evaporation method. However, a resultant crude product manufactured with any one of these methods contains a large quantity of impurities such as carbon nanoparticles. Moreover, in a method of using a catalyst, many metal nanoparticles also remain in the crude product. Thus, it is necessary to separate these particle impurities from the carbon nanotubes and purify the carbon nanotubes. Fullerenes (e.g., C60) are dissolved in a specific organic solvent such as toluene and using this solution, the fullerene is purified up to a purity equal to or higher than 99% by chromatography or the like. However, since the carbon nanotubes are insoluble to the solvent, a purifying technique such as the chromatography cannot be used for the carbon nanotubes, making it difficult to separate and purify the carbon nanotubes.

Following methods are known for separating and purifying carbon nanotubes:

1) Carbon nanotubes are dispersed using an ultrasonic cleaner or the like and separated by chromatography (Patent Document 1 mentioned below).
2) Carbon nanotubes are separated according to a difference in sedimentation velocity in a solution by centrifugation (Nonpatent Literature 1 mentioned below).
3) Using a difference in antioxidant capability (burning temperature) between a graphite piece or a carbon nanoparticle and each carbon nanotube, carbon nanotubes are heated in a vapor phase, thereby separating the carbon nanotubes (Nonpatent Literature 2 mentioned below).
4) Carbon nanotubes are dispersed in an acid such as a nitric acid, a hydrochloric acid, or an oxygenated water, heated, and agitated, thereby oxidizing and eliminating the carbon nanotubes (Nonpatent Literature 3 mentioned below).
5) Carbon nanotubes are charged, thereby separating metallic carbon nanotubes from semiconducting carbon nanotubes (Patent Document 2 mentioned below).
6) Carbon nanotubes are separated and recovered by electrophoresis (Patent Document 3 mentioned below).
7) Carbon nanotubes are dispersed in a solvent, and filtered by a membrane filter.

However, no definite purifying method is reported yet.

Meanwhile, with a view of enabling carbon nanotubes to react during separation and purification or in a liquid phase, many scientists have tried to make the carbon nanotube soluble. As a method for making carbon nanotube soluble, there are known the following methods 1) and 2). With the method 1), each carbon nanotube is treated by a strong acid or the like, whereby a terminal end or a defective region of the carbon nanotube is functionalized. A highly fat-soluble region is introduced from the functionalized terminal end or defective region through a covalent bond, thereby making the carbon nanotube soluble carbon nanotube. With the method 2), a highly fat-soluble region is introduced into each carbon nanotube through a non-covalent bond, thereby making the carbon nanotube soluble. The method 2) enables the carbon nanotubes to be recovered in the same form as that before purification without damaging a structure of each carbon nanotube, and is simpler than the method 1). The method 2) is, therefore, superior to the method 1). Quite recently, there is reported use of protoporphyrin as a soluble reagent (Nonpatent Literature 4 mentioned below). Nevertheless, no attempt has been made yet to select one of diameters of the carbon nanotubes simultaneously with making carbon nanotubes soluble.

Asides from separating and purifying the carbon nanotubes and making the carbon nanotubes soluble, a method for directly synthesizing carbon nanotubes uniform in diameter, length or chirality has been studied and developed.

Generally, carbon nanotubes are classified as multiwalled nanotubes and single-walled nanotubes. The single-walled carbon nanotubes, in particular, are expected to be used for next-generation electronic devices. Actually, however, a technique capable of manufacturing these single-walled carbon nanotubes at low cost, large in quantity, efficiently,

and easily has not been discovered yet. As a method for manufacturing single-walled carbon nanotubes, the arc discharge method, the laser evaporation method, and the like are disclosed, for example. With these methods, manufacturing cost is high and it is difficult to mass-produce carbon nanotubes. Furthermore, it is said that a diameter of each carbon nanotube depends on a reaction temperature and a particle diameter of a catalytic metal. With the arc discharge method or the laser evaporation method, it is difficult to strictly control temperature in a reaction system and the particle diameter of the catalytic metal. As a result, it is difficult to obtain homogeneous carbon nanotubes having a desired diameter. Furthermore, with an ordinary gaseous phase synthesis method using a catalyst, a highly reactive acetylene and carbon monoxide are used as materials for the carbon nanotubes. With this ordinary gaseous phase synthesis method using the catalyst, the carbon nanotubes are grown outside of pores of catalyst carriers. Due to this, the diameters of the carbon nanotubes cannot be controlled, and multiwalled shells tend to increase.

Patent Document 1: Japanese Patent Application Laid-open No. H06-228824

Patent Document 2: Japanese Patent Application Laid-open No. H08-231210
Patent Document 3: Japanese Patent Application Laid-open No. 2000-72422
Nonpatent Literature 1: Bando et al.: Appl. Phys. A67, p. 23 (1998)
Nonpatent Literature 2: Ebbesen et al.: Nature. 367, p. 519 (1994)
Nonpatent Literature 3: Advancec Materials. 10, P. 611 (1998)
Nonpatent Literature 4: Murakami et al.: Chem. Phys. Lett. 378, p481 (2003)
Nonpatent Literature 5: Kukovecz et al.: Phys. Chem. Chem. Phys. 5, p582 (2003)

## DISCLOSURE OF INVENTION

## PROBLEM TO BE SOLVED BY THE INVENTION

It is known that the carbon nanotubes greatly differ in physical properties depending on whether the carbon nanotubes are multiwalled or single-walled, on diameter, or on chirality. To realize application of the carbon nanotubes to electronic materials as expected in the future, it is dispensable to control structures of the carbon nanotubes. As explained, attempts to synthesize carbon nanotubes uniform in composition in a manufacturing phase have been widely made so far. It has been possible to control manufacturing of the carbon nanotubes to separate multiwalled carbon nanotubes from single-walled carbon nanotubes by elaborately selecting a type, a shape or the like of the catalyst. However, no control over the diameter, length, and chirality of each carbon nanotube has been exercised yet.

As can be seen, with the conventional methods for manufacturing carbon nanotubes, it is difficult to selectively manufacture carbon nanotubes having a specific structure.

In these circumstances, it is an object of the present invention to provide a method for purifying carbon nanotubes for which a specific diameter or length can be selected, and carbon nanotubes purified using the purifying method.

## MEANS FOR SOLVING PROBLEM

To solve the problems and attain the object, according to the present invention, a specific template compound is intervened in each carbon nanotube insoluble to an ordinary solvent, thereby extracting the carbon nanotubes into the solvent, and purifying and recovering the carbon nanotubes from the solvent.

In other words, according to an aspect of the present invention, a method for purifying carbon nanotubes includes immersing carbon nanotubes into a solution in which a template compound consisting of a plurality of receptor regions each including a conjugated ring structure and a spacer region that fixes the receptor regions is dissolved, and extracting specific carbon nanotubes into the solution; and recovering the extracted carbon nanotubes.
Moreover, the extracting includes performing ultrasonic irradiation.
Furthermore, the recovering includes centrifuging.
Moreover, the extracting includes using tetrahydrofuran as a solvent.
Examples of the THF include 2-methyltetrahydrofuran, 2, 5-dimethyltetrahydrofuran, and THF derivatives. However, it is preferable to use the THF in view of versatility, manageability, and cost. In the present invention, the extraction means a state in which the carbon nanotubes are dissolved or dispersed in a solution.

According to another aspect of the present invention, in a carbon nanotube a half width of a peak appearing near a spectrum of 200 $cm^{-1}$ obtained by a Raman scattering measurement is equal to or smaller than 20 $cm^{-1}$.
Furthermore, the carbon nanotubes according to the present invention carry, on their surfaces, metal elements coordinated on a porphyrin skeleton of the template compound.

EFFECT OF THE INVENTION

According to the present invention, it is possible to easily obtain carbon nanotubes from which impurities are eliminated and for which a specific diameter or length is selected.

BRIEF DESCRIPTION OF DRAWINGS

Fig. 1 is an explanatory view of a template compound;

Fig. 2 is an explanatory view of a coordination state of a SWCNT and the template compound;
Fig. 3 is a graph of Raman scattering spectrums before and after purification;
Fig. 4 is a graph of spectrums obtained by enlarging wave numbers 100 to 250 $cm^{-1}$ of measurement results shown in Fig. 3;
Fig. 5 is scanning electron microscopic (SEM) photographs of the SWCNT before and after a selecting treatment;
Fig. 6 is graphs of Raman scattering spectrums before and after purification;
Fig. 7 is a graph of spectrums obtained by enlarging wave numbers 100 to 250 $cm^{-1}$ of the Raman scattering spectrums according to a second example;
Fig. 8 is SEM photographs before and after the purification according to the second example;
Fig. 9 is TEM photographs before and after the purification according to the second example;
Fig. 10 is a graph of spectrums obtained by enlarging wave numbers 100 to 250 $cm^{-1}$ of the Raman scattering spectrums according to a third example;
Fig. 11 is measurement results of SEM/EDX before and after the purification according to the third example;
Fig. 12 is TEM photographs before and after the purification according to the third example; and
Fig. 13 is SEM photographs before and after the purification according to a fourth example.

BEST MODE(S) FOR CARRYING OUT THE INVENTION

Exemplary embodiments and examples of carbon nanotubes and a purifying method thereof according to the present invention will be explained below with reference to the accompanying drawings. Note that the invention is not limited to the embodiments and examples.

As shown in Fig. 1, a template compound used in a purifying method according to the present invention is a molecule consisting of a spacer region and receptor regions. The spacer region functions to fix an angle and a distance of each of the receptor regions to some extent at which a nanotube can be enclosed by the template compound. Typical examples of the spacer region include porphyrin, naphthalene, benzene, and diphenylacetylene.

On the other hand, it is preferable that each receptor region has a structure having a high planeness and having a high compatibility to a $\pi$ plane having a similar curvature to that of a surface of the nanotube. Examples of the structure include a porphyrin or pyrene skeleton that is a conjugated ring structure. The porphyrin structure can be used in any of the spacer region and the receptor region. A central metal of the porphyrin structure can be any one of elements selected from Groups 1 to 15 in a periodic table such as zinc, iron or nickel, or can be free-base porphyrin that does not contain any metal element. It is noted, however, that a metal with Lewis acidity such as zinc is considered to have a higher compatibility to the $\pi$ plane that covers up the surface of the carbon nanotube with Lewis bases. Such a metal is, therefore, preferably used as the receptor region.

The template compound can basically correspond to a carbon nanotube having every diameter. This is because a distance and an angle between the receptors can be freely designed according to diameters of the carbon nanotubes to be separated.

The receptor regions can be either equal or different in chemical structure.

If a template compound that contains an oleophilic substituent in at least one of each of the receptor regions and the spacer regions is used as the template compound, a solubility of an associated product between the template compound and the carbon nanotubes to an organic solvent is improved. Therefore, carbon nanotubes having a specific diameter can be effectively dissolved into the organic solvent.

It is preferable that the oleophilic substituent is a substituent having a carbon number 3. Examples of such a substituent include those having aliphatic substituents such as a propyl group and a butyl group, aromatic substituents such as a benzyl group, and aliphatic ring substituents such as a cyclohexyl group as basic skeletons thereof. However, the substituent is not limited thereto. Alternatively, the substituent can be any one of these substituents each of which partially contains therein an element other than carbon such as an ester bond, an amino group, and an ether bond.

Examples of the template compound are those having the following structures.

[Chemical Formula 1]

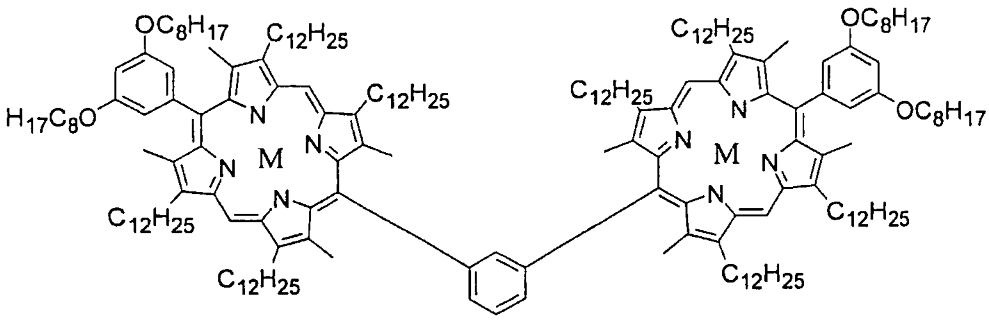

[Chemical Formula 2]

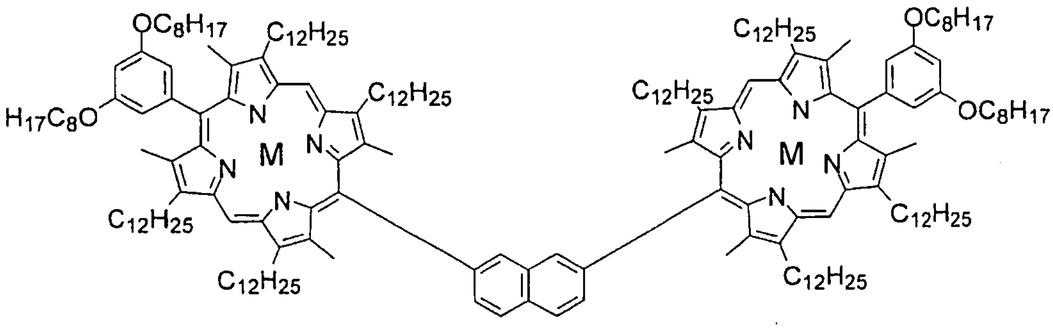

[Chemical Formula 3]

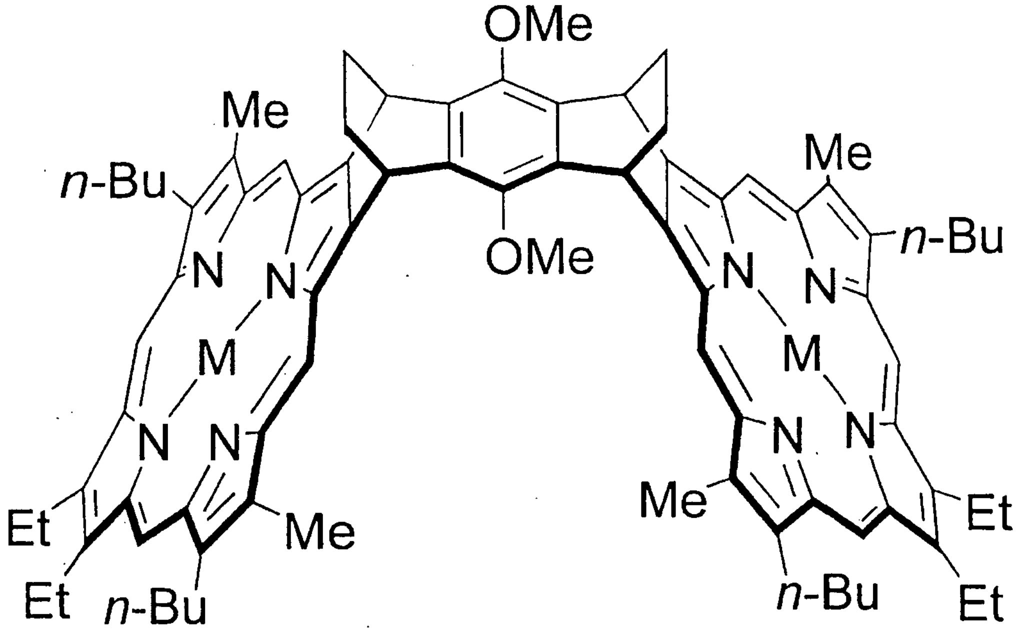

In chemical formulas 1 to 3, symbol M denotes the metal element or a hydrogen atom. Hereinafter, a compound (a), a compound (b), and a compound (c) are sometimes referred to as "M-1,3-DPB", "M-2,7-DPN", and "M-Polyco", respectively.

The carbon nanotubes used in the present invention can be either single-walled or multiwalled carbon nanotubes, and structures thereof such as diameters, lengths, and chiralities are not limited to a specific diameter, a specific length, and a specific chirality. Furthermore, each carbon nanotube can be such that a tubular skeleton thereof includes a substituent, a functional base or the like, and a fullerene or the other organic or inorganic compound can be enclosed in a tube. Elements that constitute the tube can include not only carbon but also the other elements. Alternatively, the tube can consist of a tubular compound consisting only of elements other than carbon. A method for manufacturing the carbon nanotubes is not limited to a specific method. For instance, carbon nanotubes can be manufactured by synthesizing them using graphite, hydrocarbon, alcohol, carbon monoxide, and the like as materials therefor by the arc discharge method, the laser evaporation method, the CVD method or the like. The carbon nanotubes thus synthesized can be washed with an acid or burned within a furnace, thereby eliminating impurities from the carbon nanotubes to some extent.

A solvent for extracting the carbon nanotubes used in the present invention into the solution is preferably THF. However, the solvent is not limited to the THF but can be an arbitrary solvent that can dissolve the template compound. Examples of the solvent include chloroform, dichloromethane, toluene, benzene, chlorobenzene, dimethylformamide, dimethyl sulfoxide, hexane, acetone, methanol, ethanol, isopropanol, butanol, acetonitrile, and diethylether.

At a step of extracting the carbon nanotubes, ultrasonic irradiation, agitation, heating or the like is applicable. The ultrasonic irradiation is more preferable since it can be expected to produce an effect of releasing a strong bundle formed by the nanotubes. Types of an ultrasonic irradiation apparatus include a bus type, a hone type, and the like. An arbitrary type of the ultrasonic irradiation apparatus can be used. However, since the hone-type ultrasonic irradiation apparatus directly acts on a suspension including the carbon nanotubes, the apparatus is expected to produce the greater effect of releasing the bundle.

At a step of recovering the extracted carbon nanotubes, the carbon nanotubes that are suspended without being dissolved in the solution and the other impurities are precipitated using centrifugation, a supernatant is carefully drawn up by a pipette so as not to mix solid substances into the supernatant or a solid-liquid separation is performed by decantation. The centrifugation can be replaced by a solid-liquid separation by means of natural sedimentation or filtering.

A step of separating the carbon nanotubes and the template compound from an associated product between the carbon nanotubes and the template compound contained in the supernatant, and of extracting pure carbon nanotubes is executed as follows. An equilibrium between the carbon nanotubes and the associated product between the template compound and the carbon nanotubes is shifted to a former side by, for example, changing a temperature (heating or cooling the supernatant), adding another solvent to the supernatant, applying thereto a physical stimulus such as a light or an ultrasonic wave, or adding thereto a reagent that inhibits a supramolecular bond between the receptor regions and the surface of each nanotube. According to the present invention, the supernatant is left stationary for a few hours

at a room temperature, thereby precipitating the carbon nanotubes. The obtained carbon nanotubes are subjected again to the centrifugation for the solid-liquid separation, a solvent is added to the solid substances, and the ultrasonic irradiation is performed to wash the carbon nanotubes, thereby obtaining carbon nanotubes having a selected diameter.

FIRST EXAMPLE

In the first example, naphthalene is used as the spacer and a porphyrin including a zinc at its center is used as each receptor. The template compound according to the first example will be referred to as "template compound A" hereinafter. About 0.3 milligrams of the template compound A is added and dissolved into 1 milliliter of the solvent, providing a uniform solution. Thereafter, about 1 milligram of single-walled carbon nanotubes (hereinafter "SWCNTs") are added into the solution. The solvent used in this example is tetrahydrofuran (THF). However, an arbitrary solvent can be used as long as the solvent can dissolve the template compound. Examples of the solvent include chloroform, dichloromethane, toluene, benzene, chlorobenzene, dimethylformamide, dimethyl sulfoxide, hexane, acetone, methanol, ethanol, isopropanol, butanol, acetonitrile, and diethylether.

An obtained suspension is subjected to ultrasonic irradiation for about 10 minutes, and then subjected to centrifugation for about 15 minutes. In the suspension in this state, the SWCNTs having high compatibilities with the template compound form associated products with the template compound, and dissolved or highly dispersed in the solvent. On the other hand, the SWCNTs having low compatibilities with the template compound are provided as a precipitate (B) by the centrifugation without being dispersed in the solvent. At this moment, the impurities are simultaneously provided as the precipitate. A supernatant is a black liquid in which the SWCNTs having high compatibilities with the template compound are dissolved or dispersed.

The compatibility between the template compound and each SWCNT is determined by a magnitude of the spacer region of the template compound and an angle formed between a spacer molecule and each receptor region. The SWCNT having a diameter enclosed by a space formed by the template compound forms an associated product with the template compound, and can be thereby extracted into the solvent. Fig. 2 typically depicts this state.

The black supernatant is drawn up by a pipette, thereby performing a liquid-solid separation. After the supernatant is left at a room temperature, a black precipitate is obtained. After a centrifugal operation for about 15 minutes, the supernatant including the template compound is recovered, and a solvent (1 milliliter) is added to the black precipitate. The resultant solution is subjected to ultrasonic irradiation for about 5 minutes, and then subjected to the centrifugal operation for about 15 minutes. Thereafter, the supernatant is recovered again, thereby washing the precipitate. After the precipitate is dried at the room temperature in a vacuum, the precipitate is subjected to Raman scattering measurement and to an electron microscopic analysis if it is necessary.

The Raman scattering measurement is to measure the precipitate after the washing. As a laser source, a laser beam of 514.5 nanometers is used. Fig. 3 is a measurement result and Fig. 4 depicts narrow spectrums obtained by enlarging wave numbers 100 to 250 $cm^{-1}$ of the spectrums shown in Fig. 3. A half width is measured according to the following procedures as 21 $cm^{-1}$ if the SWCNT before a selecting operation is measured, and is 20 $cm^{-1}$ if that after the selecting operation is measured.

A similar operation to the selecting operation is performed repeatedly using the other SWCNT samples. A half width is 20 $cm^{-1}$ for every SWNCT sample.

In Fig. 3, a numerical value indicates an intensity of a scattered light at each highest peak (1593 $cm^{-1}$). In Fig. 4, numerical values in parentheses indicate a wave number of peak and an intensity of the peak.

[Method for measuring half width]

A line parallel to a horizontal axis is drawn at half the intensity of the peak, and the wave number between two points at which this line intersects the peak is set as the half width. For instance, for the peak after purification shown in Fig. 4, an intensity of the peak is 1741, a line parallel to the horizontal axis is drawn at an intensity 871, which is half the intensity 1741 of the peak, two intersections (two points) between the line and the peak are obtained, and the wave number between the two points is read 20 $cm^{-1}$.

In Fig. 4, a peak position is a reflex of the diameter of the SWCNT. A relationship between the peak position and the diameter of the SWCNT is explained in the Non-Patent Literature 5.

In relation to the Raman scattering measurement, several relational equations for calculating the diameter of the SWCNT by the peak appearing in a range from 150 to 300 $cm^{-1}$ are discovered. In the Non-Patent Literature 5, for example, following equations have been cited:

$$(1)\quad \omega=(224/d)+14$$

$$(2)\ \omega=(232/d)+6.5$$

$$(3)\ \omega=(214/d)+6$$

$$(4)\ \omega=234/d$$

$$(5)\ \omega=248/d$$

In the above equations, ω denotes the peak wave number in $cm^{-1}$ detected by the Raman scattering measurement, and d denotes the diameter of the SWCNT in nanometers.

According to the equation (1), the diameter of the SWCNT after the selection shown in Figs. 3 and 4 is 1.28 nanometers. The half width is reduced by the selecting operation. This indicates that a ratio of presence of SWCNTs having the diameter of 1.28 nanometers after the selecting operation increases, thus substantiating that the selecting method according to this example is effective for selection of the diameter of the SWCNTs.

The SWCNTs before and after the selecting treatment are observed by the SEM. Fig. 5 is a result of the observation. Before the selection, many foreign matters are observed. However, after the selection, no foreign matters are observed and only the SWCNTs are observed. Obviously from this, the selecting operation according to this example also produces a purification effect of eliminating the foreign matters from the SWCNTs.

Furthermore, Raman scattering spectrums before and after the selecting operation are measured while changing a diameter of the laser beam of the laser source to 785 nanometers. Fig. 6 is a result of the measurement. In Fig. 6, numerical values in parentheses indicate the wave number at the peak and the intensity of the peak, respectively. Before the selection, three peaks are present. After the selection, the two peaks of 170 $cm^{-1}$ and 206 $cm^{-1}$ are substantially eliminated and only one peak is present. Obviously from this, the selecting operation exhibits the purification effect.

SECOND EXAMPLE

In the second example, $Zn_2$-1,3-DPB (hereinafter, "template compound B") containing a benzene ring as the spacer and a porphyrin including zinc at its center as each receptor is used in place of the template compound A used in the first example.
In addition, the second example differs from the first example in that the THF is further added to a precipitate (corresponding to the precipitate (B)) generated by the centrifugation in the operation for extracting carbon nanotubes so as to extract SWCNTs again.

In the second example, 2.5 milligrams of the template compound B is dissolved in the THF (6 milliliters), and 3.3 milligrams of SWCNTs are added to the THF into which the template compound B is dissolved. The template compound B, the THF, and the SWCNTs are mixed together while being ground down in a mortar for about 30 minutes. The obtained suspension is moved into a glass container using the THF (3 milliliters), subjected to ultrasonic irradiation at 42 kilohertz for 3 hours, and then subjected to centrifugation for 15 minutes. In a supernatant after the centrifugation, it is considered that the SWCNTs having a specific diameter form associated products with the template compound B and that the associated products are dissolved or highly dispersed (simply "dissolved" hereinafter) in the THF.

The SWCNTs that cannot form stable associated products with the template compound B are not dissolved in the THF but provided as a precipitate by the centrifugation together with impurities. This precipitate will be referred to as "first residue" hereinafter. It is noted that a part of the template compound B is not dissolved in the THF but included in the first residue.

The supernatant, in which the SWCNTs and the template compound B form the associated products and are dissolved, is drawn up by the pipette, and subjected to centrifugation for 1 hour. A precipitate obtained is washed with the THF (6 milliliters), and dried at the room temperature in vacuum, thereby obtaining SWCNTs after the selection. The SWCNTs after the selection will be referred to as "first extract" hereinafter. On the other hand, the washing solution is mixed with the supernatant after the centrifugation, the mixture is condensed and dried, and the template compound B is thereby recovered. The recovered template compound B will be referred to as "first recovered product".

The THF (6 milliliters) is added to the first residue, and the resultant solution is subjected to ultrasonic irradiation

for 18 hours in the same conditions as those explained above, and then subjected to centrifugation in the same method as that for obtaining the first extract. Solid substances after the supernatant is eliminated from the solution are dried in vacuum and provided as a second residue. The supernatant is subjected to centrifugation for 4 hours, and an obtained precipitate is dried at the room temperature in vacuum. This precipitate will be referred to as "second extract" hereinafter. The supernatant after the centrifugation is mixed with the first recovered product, and the mixture is condensed and dried.

The extracts and residues thus obtained are analyzed by the Raman scattering measurement, the SEM, and a transmission electron microscope (TEM). A magnification of the SEM is 100,000 times unless otherwise specified.

The analysis using the RAM scattering measurement is performed by the same method in the same conditions as those according to the first example. Fig. 7 depicts narrow spectrums obtained by enlarging regions of the wave numbers 100 to 250 $cm^{-1}$ of Raman scattering spectrums using a laser source of 785 nanometers.

If the diameters of the SWCNTs calculated by the equation (1) are used, the Raman spectrums shown in Fig. 7 can be interpreted as follows. Among the SWCNTs having a diameter of 1.43 nanometers (173 $cm^{-1}$) and a diameter of 1.53 nanometers (162 $cm^{-1}$) present before purification, the SWCNTs having the diameter of 1.43 nanometers (173 $cm^{-1}$) are preferentially extracted by two extracting operations. As a result, more SWCNTs having the diameter of 1.43 nanometers (173 $cm^{-1}$) are considered to remain than those having the diameter of 1.53 nanometers (162 $cm^{-1}$).

The SWCNTs before and after the selecting treatment are measured by the SEM. Fig. 8 is a measurement result. According to the measurement using the SEM, many foreign matters are observed in the SWCNTs before the selection. However, no foreign matters are observed and' only the SWCNTs are present in the second extract after the selection. This substantiates that the operation according to this example can produce the purification effect of eliminating the foreign matters from the SWCNTs similarly to that according to the first example.

Fig. 9 is a TEM photograph (magnification of 500,000 times) of the first extract. This photograph indicates that the obtained SWCNTs are an assembly of a plurality of carbon nanotubes uniform in diameters and that they form a bundle.

THIRD EXAMPLE

In the third example, $Zn_2$-Polycon (hereinafter, "template compound C") containing zinc that is a metal element coordinated at a center of the receptor is used as the template compound.

In this example, SWCNTs having a specific diameter are selected and extracted by the same method as that according to the second method. In addition, obtained extracts and residues are analyzed by the Raman scattering measurement, the SEM, and the TEM similarly to the second example.

Fig. 10 depicts narrow spectrums obtained by enlarging regions at wave numbers 100 to 250 $cm^{-1}$ of Raman scattering spectrums using a laser source of 785 nanometers. In Fig. 10, a numerical value in parentheses indicates a wave number of a peak.

As for the result of the Raman scattering measurement shown in Fig. 10, the diameters of the SWCNTs are calculated by the equation (1). If so, it is recognized that the selecting operation enables the SWCNTs having the diameter of 1.43 nanometers (173 $cm^{-1}$) to be preferentially extracted in this example similarly to the second example. In addition, the Raman scattering spectrums of the first extract and the second extract are equal in peak position, which indicates that the SWCNTs having the uniform diameter are selected.

A ratio of a peak intensity at the diameter 173 $cm^{-1}$ to that at the diameter 162 $cm^{-1}$ in the residues according to this example is compared with that according to the second example. If so, the ratio of the peak intensity at 173 $cm^{-1}$ to the peak intensity at 162 $cm^{-1}$ in this example is lower than that in the second example. It is considered that more SWCNTs having the diameter of 1.43 nanometers (173 $cm^{-1}$) are extracted in this example, and this indicates that a manner of selection is changed by changing the chemical structure of the template compound.

The half width of the peak near 200 $cm^{-1}$ of each Raman scattering spectrum using a laser source of 514.5 nanometers is measured. As a result, the half width is 21 $cm^{-1}$ for the second residue and 20 $cm^{-1}$ for the first and second extracts.

Fig. 11 depicts measurement results of the SWCNTs before and after the selecting operation by the SEM and a fluorescent X-rays (hereinafter, "EDX"). Fig. 12 is TEM photographs of the SWCNTs before and after the selecting operation, respectively.

According to the measurement using the SEM, many foreign matters are observed in the SWCNTs and the first residue before the selection. However, no foreign matters are observed and only the SWCNTs are observed in the second extract after the selection. This substantiates that the operation according to this example can produce the purification effect. Likewise, according to the TEM photographs, many foreign matters are observed in the SWCNTs before the selection. However, no foreign matters are observed and only SWCNTs are observed in the second extract after the selection. The purification effect can be confirmed by the TEM similarly to the SEM measurement.

According to the EDX measurement, Zn that is not present in each SWCNT before the purification is recognized in the first extract. The reason is considered as follows. When the template compound C and each SWCNT forms the associated product, Zn coordinated on the porphyrin skeleton of each receptor region spreads to the SWCNT and is

carried on the surface of the selected SWCNT. Namely, with the method for purifying carbon nanotubes according to the present invention, a specific metal element is coordinated on the porphyrin skeleton of each receptor region of the template compound, whereby the specific metal element can be carried by the SWCNT after the purification. As for a manner of carrying the metal element, a manner of carrying only the metal element by each carbon nanotube and a manner of carrying the metal element by each carbon nanotube with the metal element coordinated on the porphyrin skeleton can be possible.

FOURTH EXAMPLE

In this example, SWCNTs are purified similarly to the second example except that the metal element of the template compound B ($Zn_2$-1,3-DPB) is changed from Zn to Ni and that a first ultrasonic irradiation is performed for 14 hours. The second extract and the first residue obtained are observed by the SEM in the same method as that according to the second example. Fig. 13 is a result of the observation.

In this example, similarly to the second example, many foreign matters are observed in the SWCNTs and the first residue before the selection. However, no foreign matters are observed and only the SWCNTs are observed in the second extract after the selection. The purification effect can be, therefore, confirmed.

For the SWCNTs having the selected diameter, a length of the SWCNTs can be selected by, for example, gel filtration chromatography. Namely, by combining the diameter selecting method with a method for selecting a molecular magnitude by filling a molecular sieve using a porous gel such as that having a three-dimensional network structure into a chromatogram column, the length of the SWCNTs is selected.

A mechanism for the selection of the length is as follows. The purifying method using the template compound according to the present invention enables selection of the diameter of the SWCNTs. Therefore, by combining this method with the method for selecting the molecular magnitude by the chromatography or the like, the length of the SWCNTs can be selected. In this case, as the chromatography combined with the purifying method according to the present invention, both a method for selecting a spatial magnitude of a molecule and a method for selecting a molecular mass are available. The reason is as follows. Since each SWCNT is formed solely out of carbon atoms, the length is eventually selected if the diameter is selected in advance and the spatial magnitude is selected or the mass is selected subsequently to the selection of the diameter. Accordingly, by applying any one of various liquid chromatographies subsequently to the purifying method according to the present invention, it is possible to obtain the SWCNTs having not only the selected diameter but also the selected length.

INDUSTRIAL APPLICABILITY

The single-walled carbon nanotubes (SWCNT) selected as those having the uniform diameter by the purifying method according to the present invention are widely used as a functional material such as molecular elements that can be integrated at very high density, an occluding material that occludes various types of gases including a hydrogen gas, a field emission display (FED) member, an electrode material, an added material to a resin molded product.

Furthermore, electronic physical properties, e.g., electric resistances, of the carbon nanotubes each carrying, on the surface, the metals coordinated on the porphyrin skeleton according to the present invention can be tuned by appropriate selection of the metals to be carried by the carbon nanotubes. The carbon nanotubes thus tuned can be applied to various types of electronic materials for electronic devices and the like.

## Claims

**1.** A method for purifying carbon nanotubes, the method comprising:

immersing carbon nanotubes into a solution in which a template compound consisting of a plurality of receptor regions each including a conjugated ring structure and a spacer region that fixes the receptor regions is dissolved, and extracting specific carbon nanotubes into the solution; and
recovering the extracted carbon nanotubes.

**2.** The method according to claim 1, further comprising:

immersing the carbon nanotubes into the solution in which the template compound including an oleophilic substituent in at least one of each of the receptor regions and the spacer region is dissolved, and extracting the specific carbon nanotubes into the solution; and
recovering the extracted carbon nanotubes.

**3.** The method according to claim 1 or 2, wherein the extracting includes performing ultrasonic irradiation.

**4.** The method according to any one of claims 1 to 3, wherein the recovering includes centrifuging.

**5.** The method according to any one of claims 1 to 4, wherein the extracting includes using tetrahydrofuran as a solvent.

**6.** The method according to any one of claims 1 to 5, wherein each of the receptor regions includes a porphyrin or pyrene skeleton.

**7.** The method according to claim 6, wherein metal elements are coordinated on the porphyrin skeleton.

**8.** A carbon nanotube, wherein metal elements that can be coordinated on a porphyrin skeleton is carried on a surface.

**9.** The carbon nanotube obtained by the purifying method according to claim 1 or 2.

**10.** A carbon nanotube, wherein
a half width of a peak appearing near a spectrum of 200 $cm^{-1}$ obtained by a Raman scattering measurement is equal to or smaller than 20 $cm^{-1}$.

FIG.1

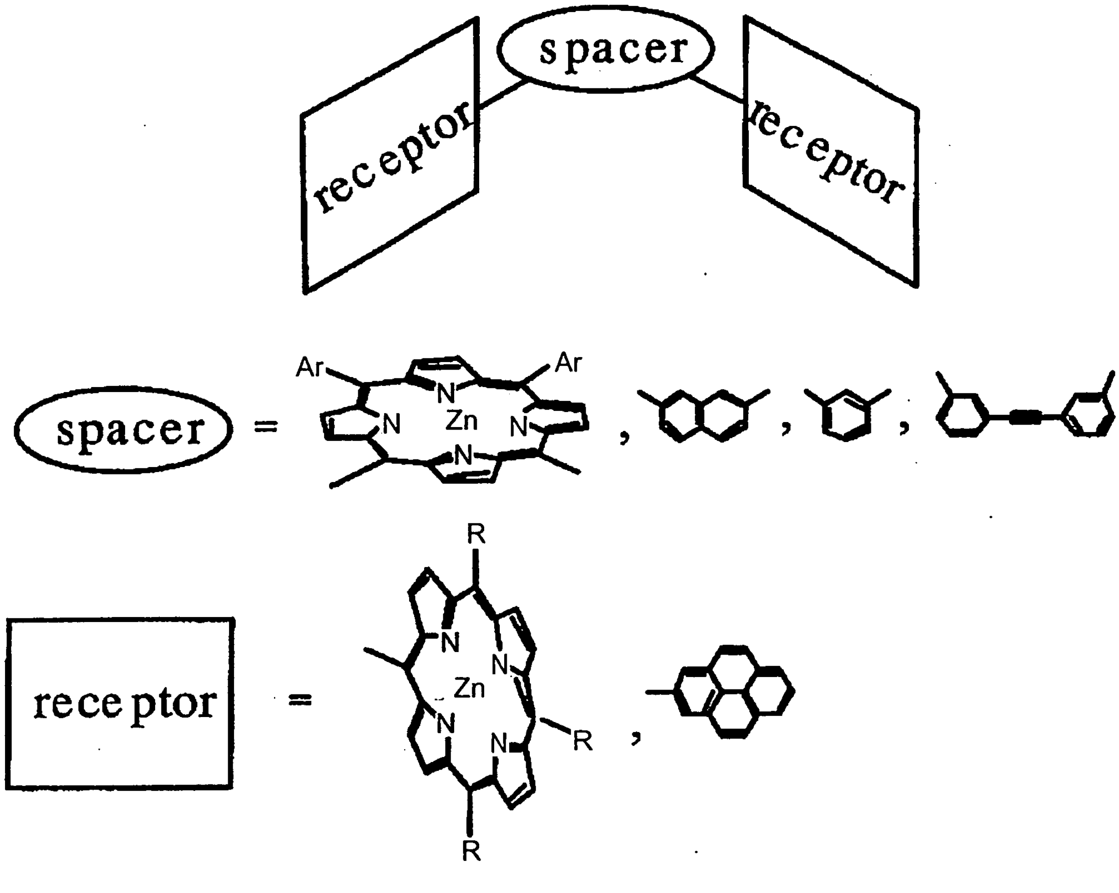

FIG.2

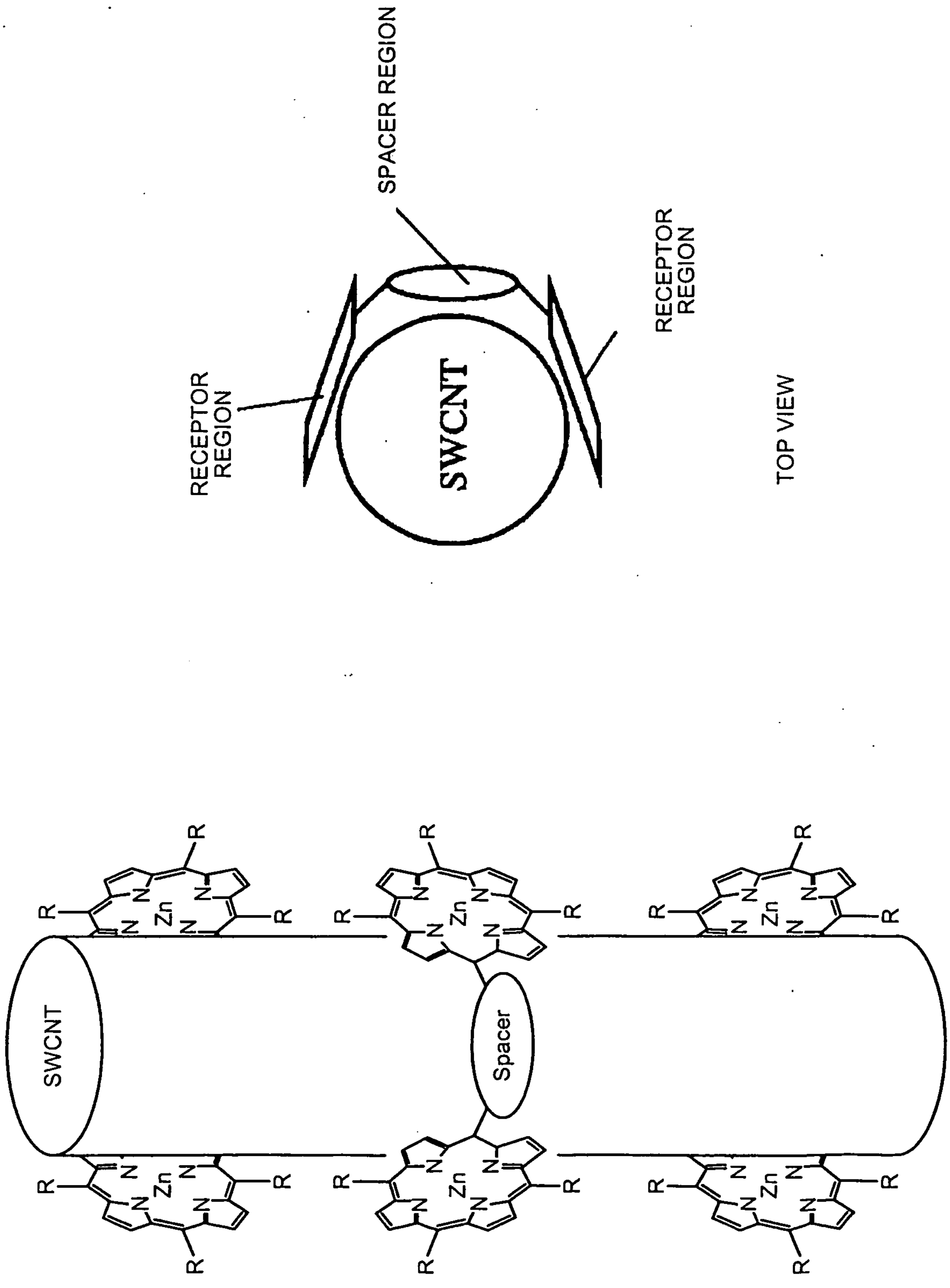
SPACER REGION
RECEPTOR REGION
SWCNT
RECEPTOR REGION
TOP VIEW
SWCNT
Spacer

FIG.3

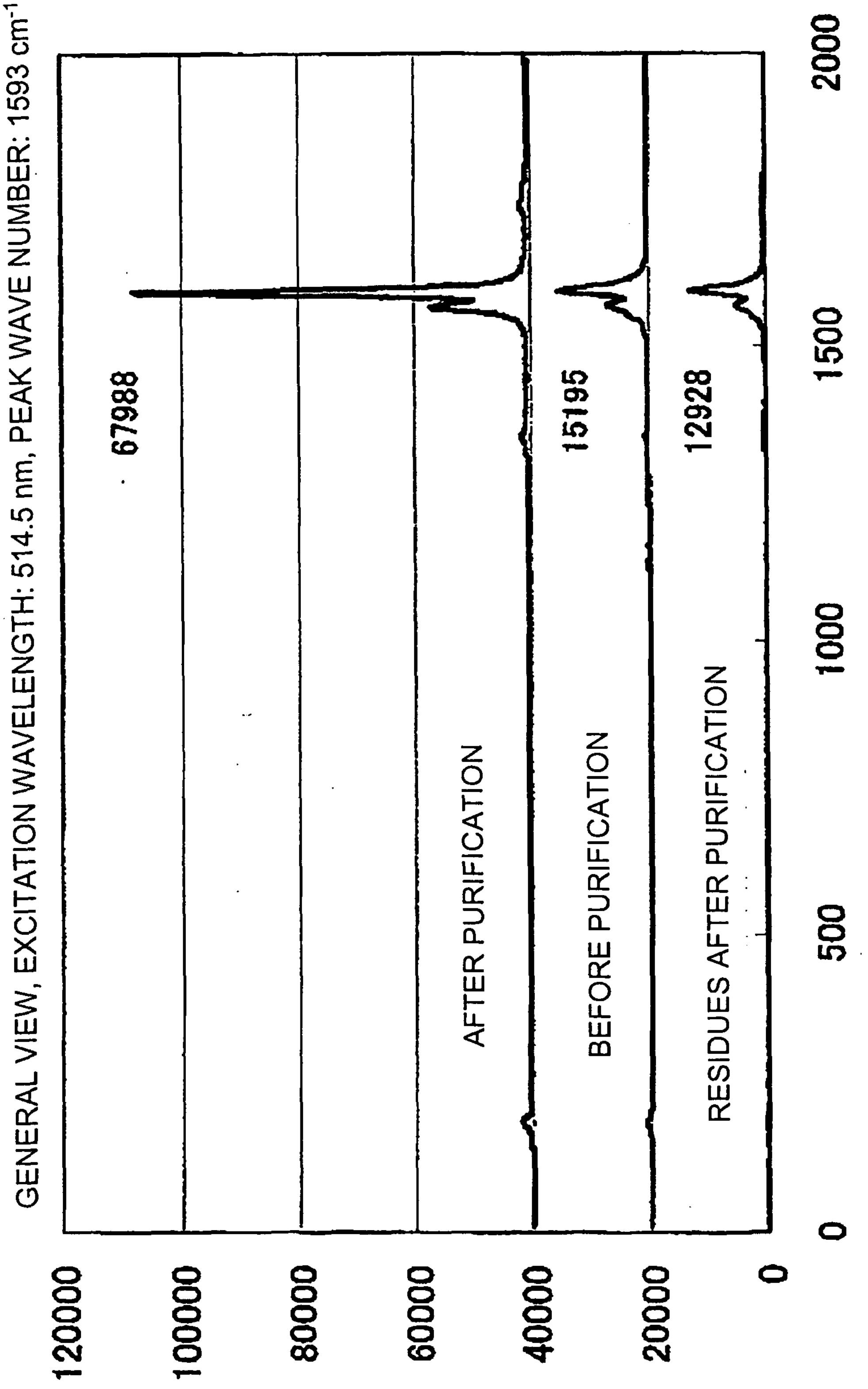
GENERAL VIEW, EXCITATION WAVELENGTH: 514.5 nm, PEAK WAVE NUMBER: 1593 cm-1
67988
15195
12928
AFTER PURIFICATION
BEFORE PURIFICATION
RESIDUES AFTER PURIFICATION
120000
100000
80000
60000
40000
20000
0
0
500
1000
1500
2000

FIG.4

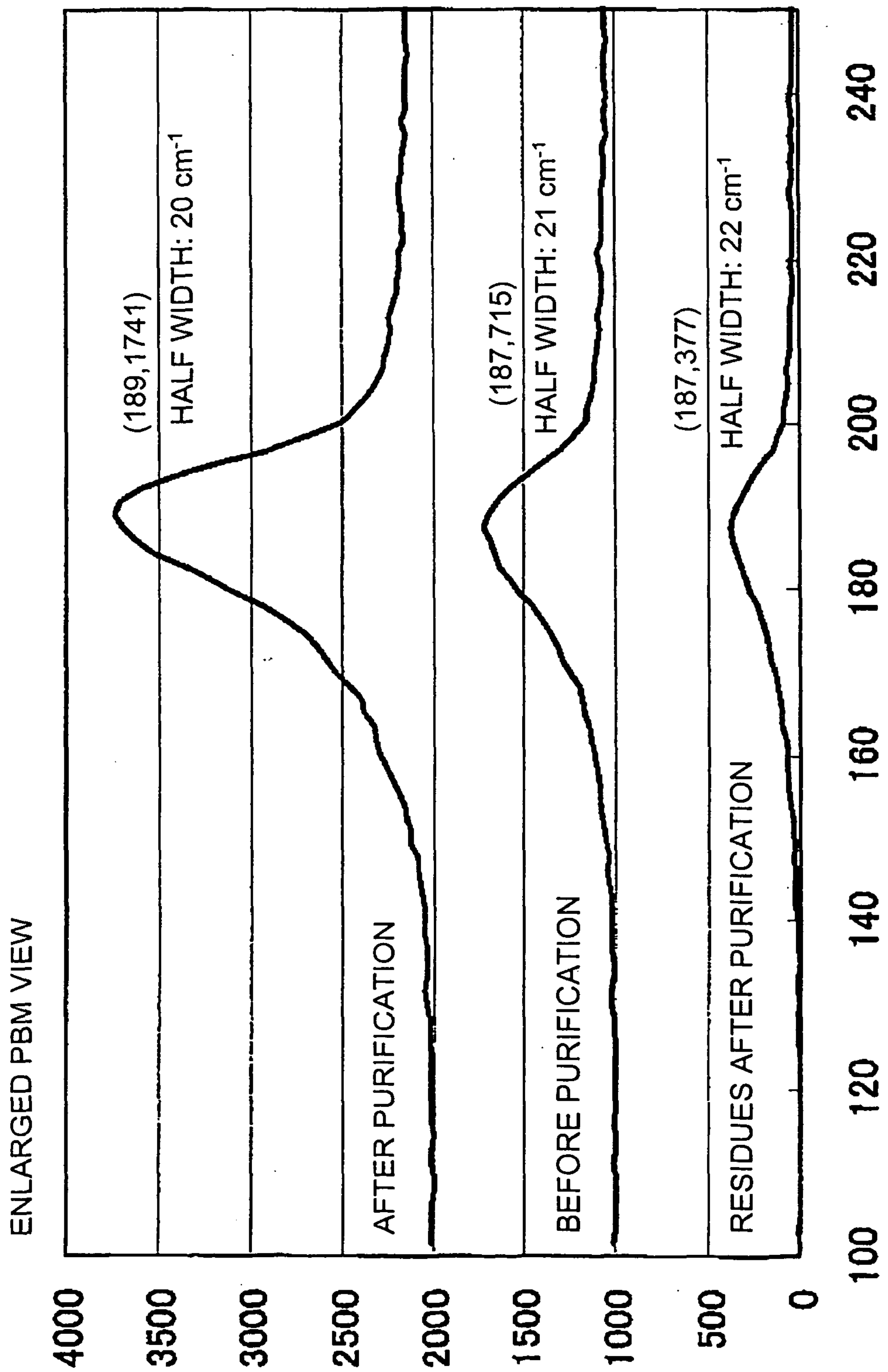
ENLARGED PBM VIEW
AFTER PURIFICATION
BEFORE PURIFICATION
RESIDUES AFTER PURIFICATION
(189,1741)
HALF WIDTH: 20 cm-1
(187,715)
HALF WIDTH: 21 cm-1
(187,377)
HALF WIDTH: 22 cm-1
4000
3500
3000
2500
2000
1500
1000
500
0
100
120
140
160
180
200
220
240

FIG.5

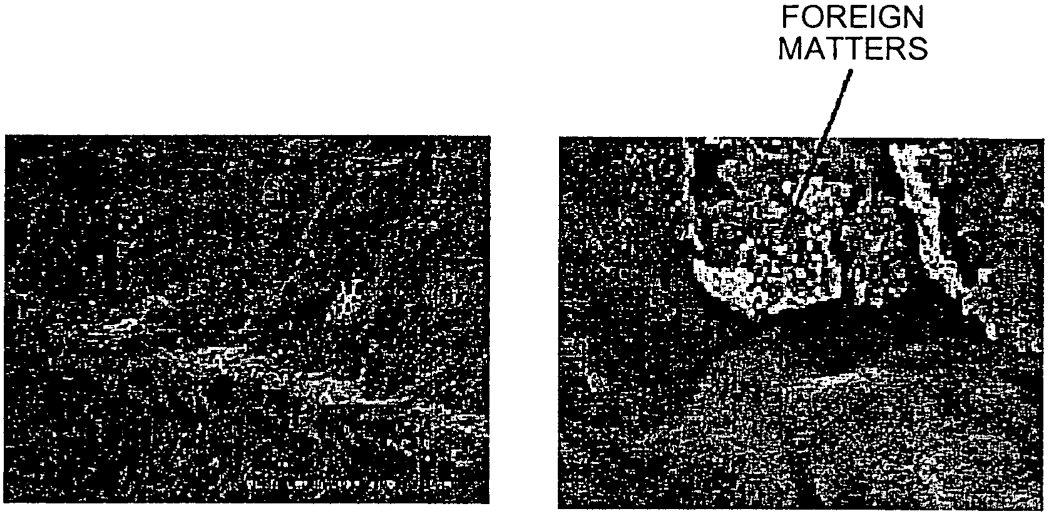


AFTER SELECTING TREATMENT

BEFORE SELECTING TREATMENT

FIG.6

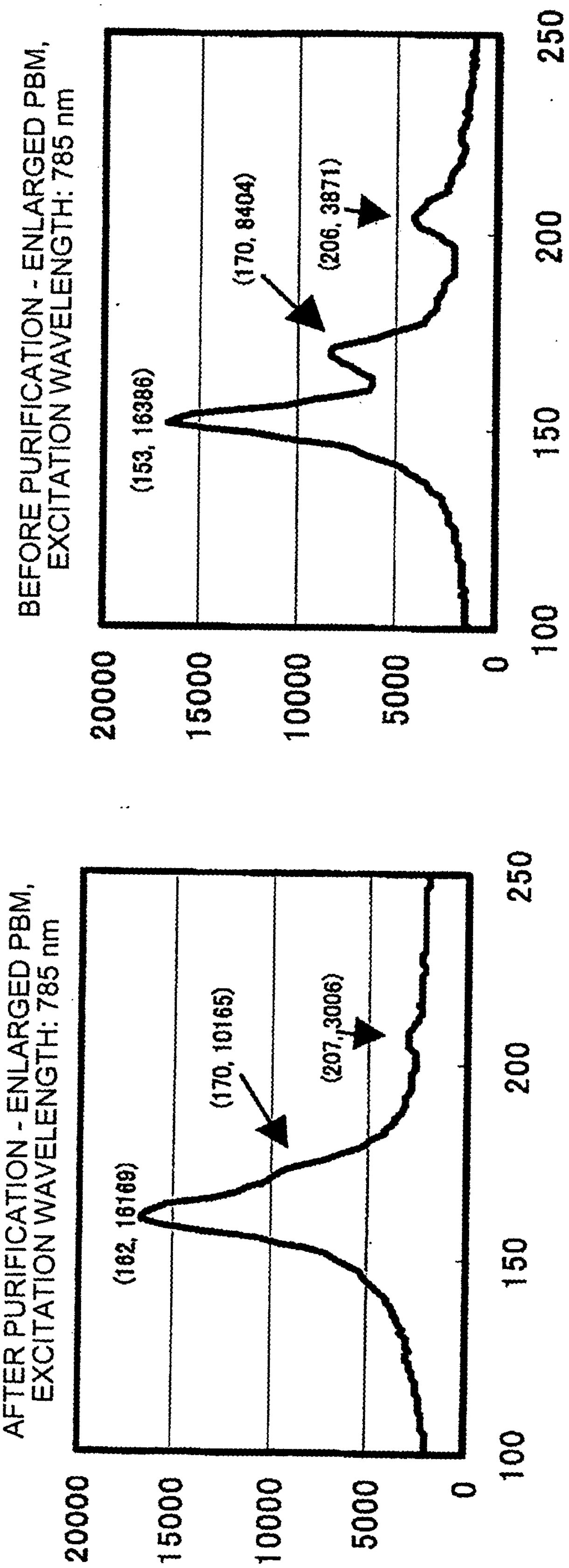
BEFORE PURIFICATION - ENLARGED PBM,
EXCITATION WAVELENGTH: 785 nm
(153, 16386)
(170, 8404)
(206, 3871)
20000
15000
10000
5000
0
100
150
200
250
AFTER PURIFICATION - ENLARGED PBM,
EXCITATION WAVELENGTH: 785 nm
(162, 16169)
(170, 10165)
(207, 3006)
20000
15000
10000
5000
0
100
150
200
250

FIG.7

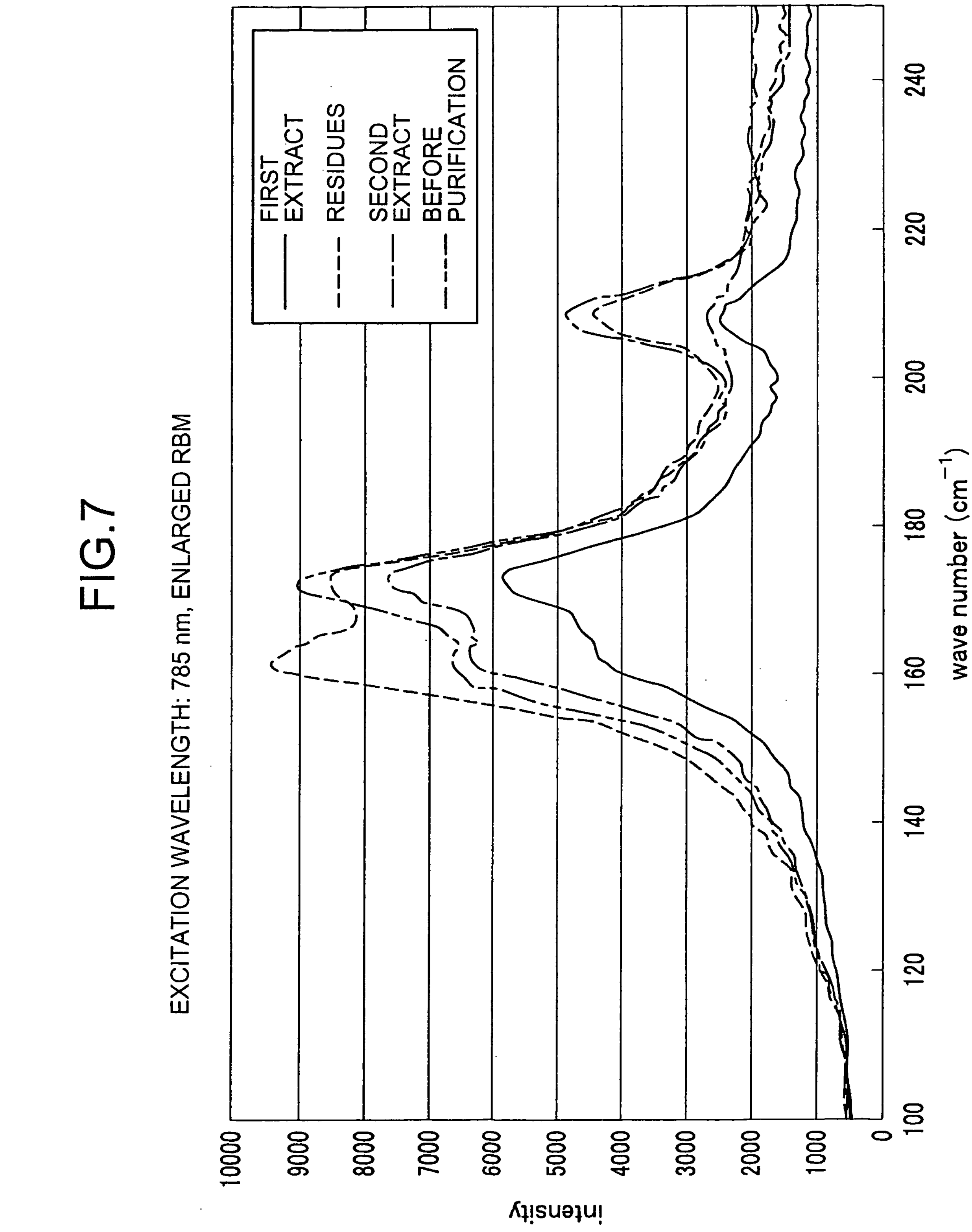
EXCITATION WAVELENGTH: 785 nm, ENLARGED RBM
FIRST EXTRACT
RESIDUES
SECOND EXTRACT
BEFORE PURIFICATION
intensity
wave number (cm$^{-1}$)
0
1000
2000
3000
4000
5000
6000
7000
8000
9000
10000
100
120
140
160
180
200
220
240

FIG.8

BEFORE PURIFICATION

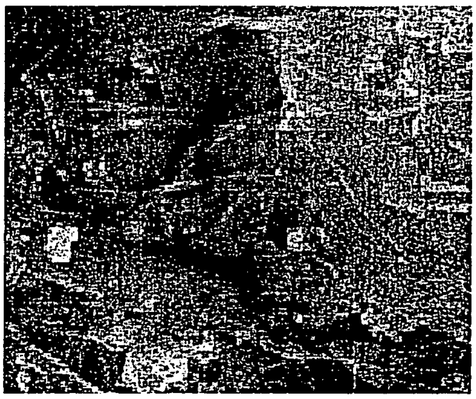

SEM

EXTRACTS

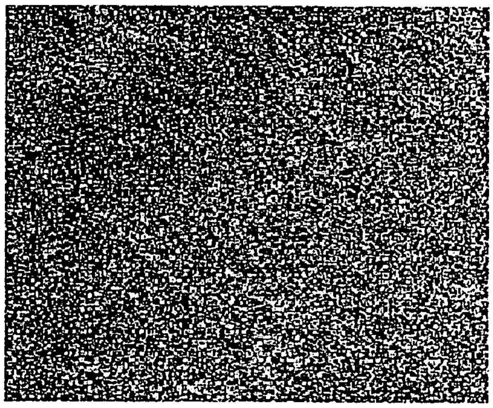

SEM

FIG.9

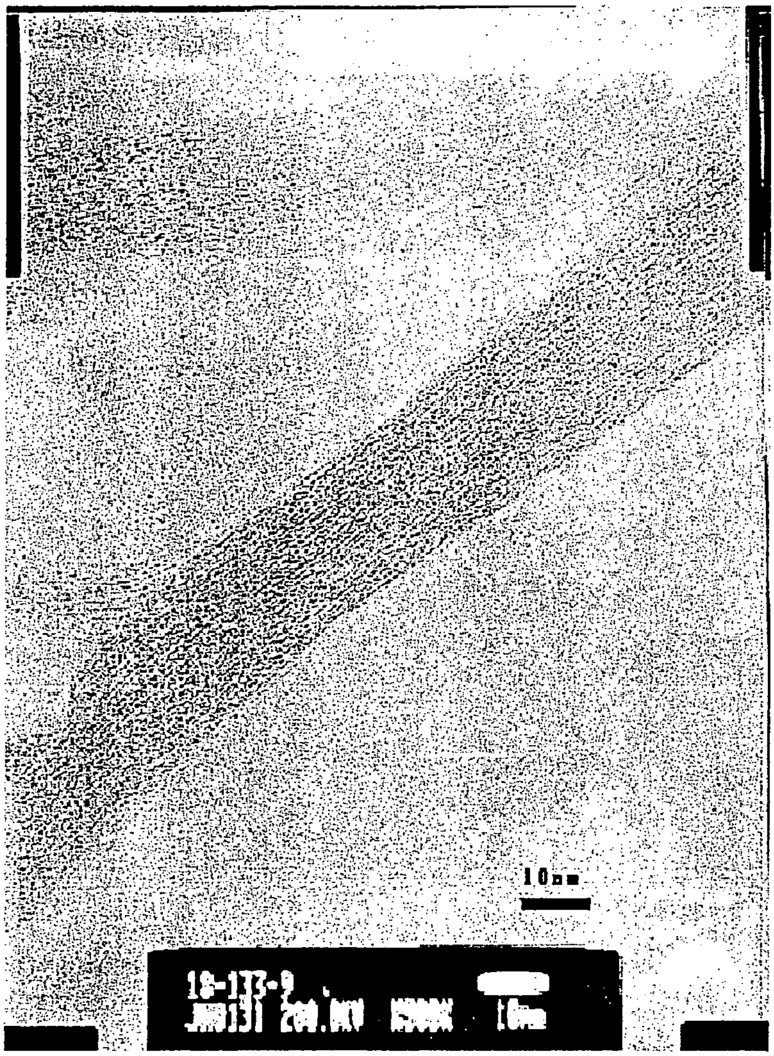

FIG.10

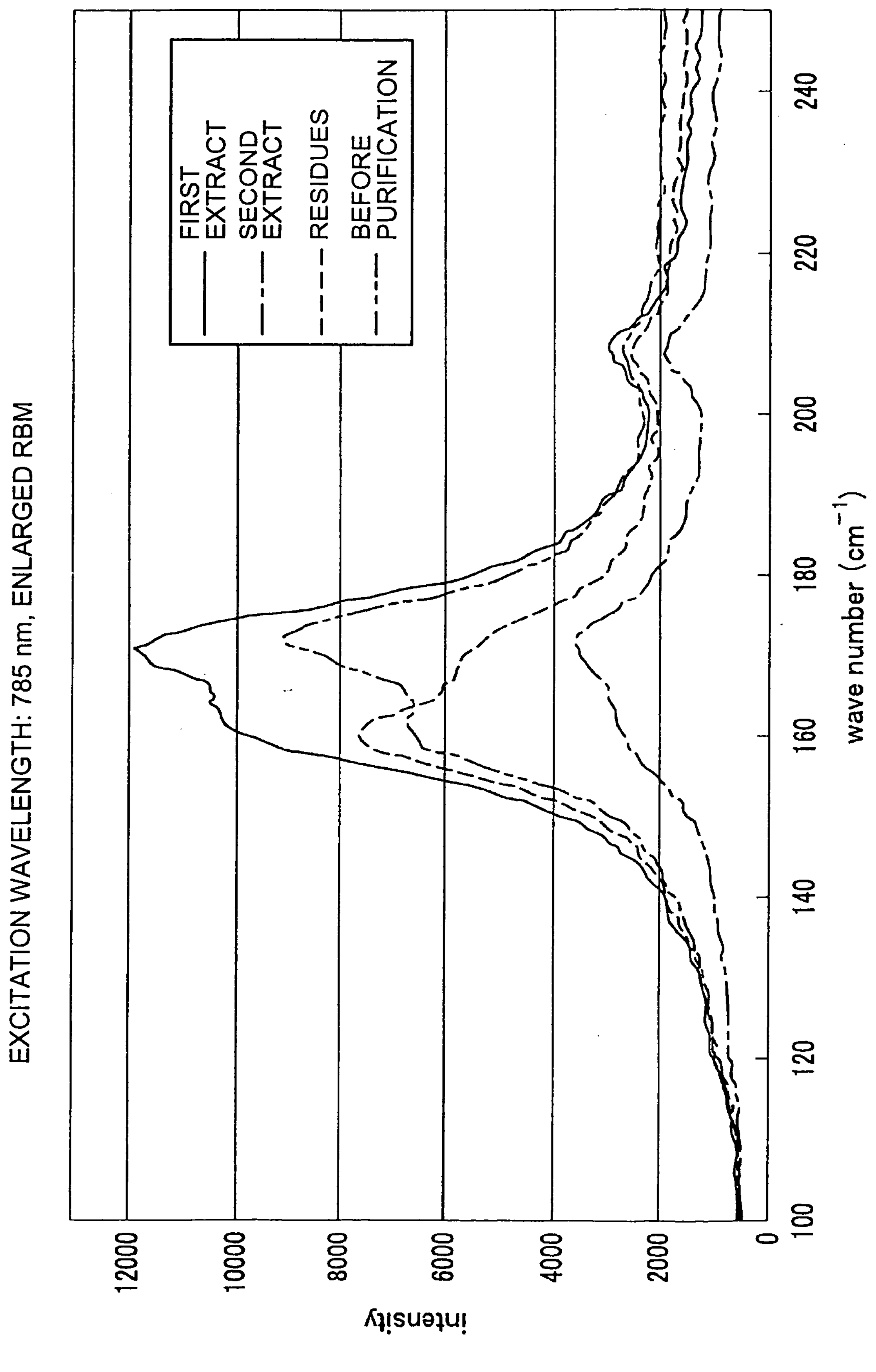
EXCITATION WAVELENGTH: 785 nm, ENLARGED RBM
FIRST EXTRACT
SECOND EXTRACT
RESIDUES
BEFORE PURIFICATION
intensity
0
2000
4000
6000
8000
10000
12000
100
120
140
160
180
200
220
240
wave number (cm$^{-1}$)

# FIG.11

BEFORE PURIFICATION

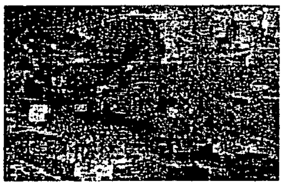

SEM

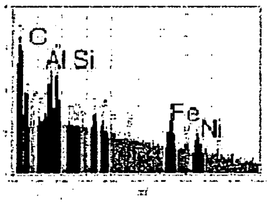


EDX

EXTRACTS

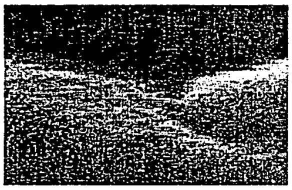

SEM

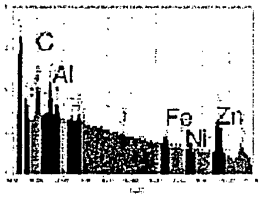


EDX

RESIDUES

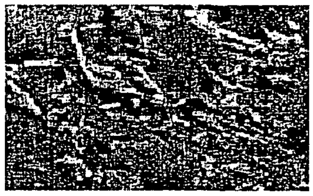

SEM

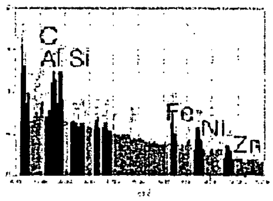


EDX

# FIG.12

TEM, BEFORE SELECTION

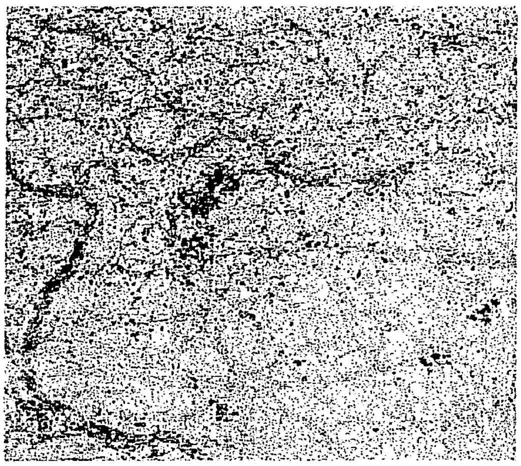

SWCNT(RAW MATERIAL), 25K

TEM, AFTER SELECTION

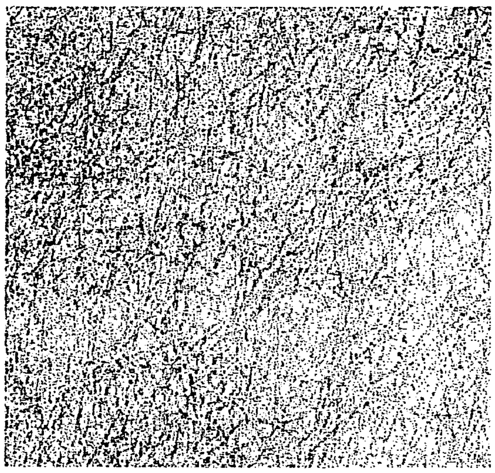

SWCNT EXTRACTED BY POLYCON, 50K

# FIG.13

BEFORE PURIFICATION | EXTRACTS | RESIDUES

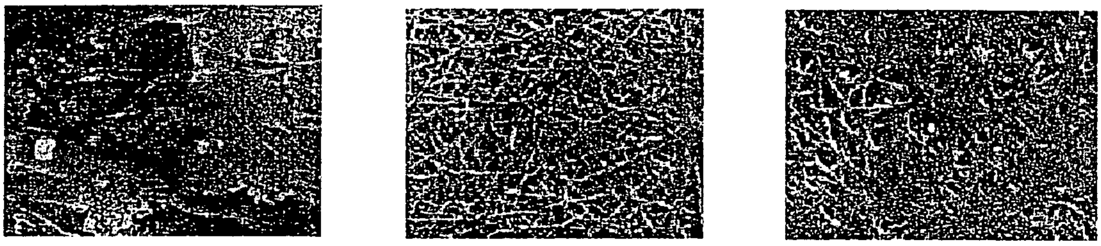

SEM | SEM | SEM

## INTERNATIONAL SEARCH REPORT

International application No.
PCT/JP2004/019606

A. CLASSIFICATION OF SUBJECT MATTER
Int.Cl[7] C01B31/02

According to International Patent Classification (IPC) or to both national classification and IPC

B. FIELDS SEARCHED

Minimum documentation searched (classification system followed by classification symbols)
Int.Cl[7] C01B31/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JSTPlus(JOIS)

C. DOCUMENTS CONSIDERED TO BE RELEVANT

| Category* | Citation of document, with indication, where appropriate, of the relevant passages | Relevant to claim No. |
|---|---|---|
| X<br>A | A.B. DALTON et al., A functional conjugated polymer to process, purify and selectively interact with single wall carbon nanotubes, Synthetic Metals, 2001, Vol.121, pages 1217 to 1218 | 9,10<br>1-8 |
| X | JP 10-273308 A (Mitsubishi Chemical Corp.), 13 October, 1998 (13.10.98), Fig. 2 (Family: none) | 9,10 |
| X | Takuro NOMURA et al., "Porphyrin Kayoka Carbon Nanotube Kozo to Tokusei", Polymer preprints, Japan, 2003, Vol.52, pages 2855 to 2856 | 8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>25 March, 2005 (25.03.05) | Date of mailing of the international search report<br>12 April, 2005 (12.04.05) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2004/019606

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-44216 A (Horcom Ltd.), 15 February, 2000 (15.02.00), Full text & EP 949199 A1 & US 6576341 B1 & DE 69908016 E | 1-7,9 |
| A | H. UNO et al., Hexagonal Columnar Porphyrin Assembly by Unique Trimeric Complexation of a Porphyrin Dimer with π-π Stacking: Remarkable Thermal Behavior in a Solid, J.Am.Chem.Soc, 2003, Vol.125, pages 12082 to 12083 | 1-7,9 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06228824 A
- JP H08231210 A
- JP 2000072422 A


### Non-patent literature cited in the description


- **BANDO et al.** *Appl. Phys.,* 1998, vol. A67, 23
- **EBBESEN et al.** *Nature,* 1994, vol. 367, 519
- *Advancec Materials,* 1998, vol. 10, 611
- **MURAKAMI et al.** *Chem. Phys. Lett.,* 2003, vol. 378, 481
- **KUKOVECZ et al.** *Phys. Chem. Chem. Phys.,* 2003, vol. 5, 582